(19) Europäisches Patentamt
European Patent Office
Office européen des brevets

(11) **EP 3 048 453 B1**

(12) **EUROPÄISCHE PATENTSCHRIFT**

(45) Veröffentlichungstag und Bekanntmachung des Hinweises auf die Patenterteilung:
**01.03.2017 Patentblatt 2017/09**

(51) Int Cl.:
*G01S 7/486* (2006.01)      *G01S 17/02* (2006.01)
*G01S 17/10* (2006.01)      *G01S 17/89* (2006.01)
*G01S 15/10* (2006.01)

(21) Anmeldenummer: **16151041.7**

(22) Anmeldetag: **13.01.2016**

(54) **VORRICHTUNG ZUR MESSUNG DER ENTFERNUNG ZU EINEM OBJEKT IN EINEM GEWÄSSER**

DEVICE FOR MEASURING THE DISTANCE TO AN OBJECT WITHIN A BODY OF WATER

DISPOSITIF DE MESURE DE DISTANCE D'UN OBJET DANS L'EAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.01.2015 AT 500392015**

(43) Veröffentlichungstag der Anmeldung:
**27.07.2016 Patentblatt 2016/30**

(73) Patentinhaber: **Riegl Laser Measurement Systems GmbH**
**3580 Horn (AT)**

(72) Erfinder:
- **RIEGL, Johannes**
  **3754 Trabenreith (AT)**
- **RIEGL, Ursula**
  **1010 Wien (AT)**
- **PFENNIGBAUER, Martin**
  **3430 Tulln (AT)**

(74) Vertreter: **Weiser, Andreas**
**Patentanwalt**
**Kopfgasse 7**
**1130 Wien (AT)**

(56) Entgegenhaltungen:
**EP-B1- 2 469 297      WO-A1-2011/137465**
**US-A1- 2014 300 885**

- **CHURCH PHILIP ET AL: "Overview of a hybrid underwater camera system", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, Bd. 9111, 23. Mai 2014 (2014-05-23), Seiten 91110O-91110O, XP060037676, DOI: 10.1117/12.2053365 ISBN: 978-1-62841-730-2**

**Beschreibung**

Die vorliegende Erfindung betrifft eine Vorrichtung zur Messung der Entfernung zu einem Objekt in einem Gewässer, insbesondere für die Vermessung des Gewässerbodens, gemäß dem Oberbegriff des Anspruchs 1.

Eine derartige Vorrichtung ist z.B. aus der US 2014/300885 A1 oder der Publikation Church Philip et al., "Overview of a hybrid underwater camera system", Optomechatronic Micro/Nano Devices and Components III, 8-10 October 2007, bekannt.

Die Vermessung von Gewässern mittels Laser-Entfernungsmessung, auch als Laser-Hydrografie oder Laser-Bathymetrie bekannt, ermöglicht durch entsprechendes Scannen des Lasermessstrahls über den Gewässerboden oder im Gewässer befindliche Objekte eine hohe Flächenabdeckung mit großer Genauigkeit. Die Laser-Hydrographie ist jedoch derzeit auf Einsatzorte beschränkt, wo die Wassertiefe nicht allzu groß und die Wassertrübung nicht allzu hoch ist. Andernfalls ist die Energie der reflektierten Laserimpulse und damit das Signal/Rausch-Verhältnis (signal-to-noise ratio, SNR) im Empfangskanal des Laser-Entfernungsmessers für eine zuverlässige Laufzeitauswertung zu gering. Als Abhilfe ist es bekannt, eine Sequenz von Laserimpulsen auszusenden und die Empfangssignale der reflektierten Laserimpulse aufzusummieren, bis sie einen Detektionsschwellwert überschreiten ("pre-detection averaging"). Das auf diese Weise erzielbare SNR steigt proportional mit der Wurzel der Anzahl aufsummierter Empfangsimpulse.

Das Aussenden einer Vielzahl von Laserimpulsen pro Messpunkt verzögert jedoch die Messung linear proportional mit der Anzahl der Impulse. Insbesondere beim Laserscannen, bei dem eine Vielzahl nebeneinanderliegender Zielpunkte vermessen werden, um ein 3D-Abbild ("Punktewolke") der Umgebung zu erstellen, ist eine kurze Gesamtmesszeit pro Entfernungsmesspunkt entscheidend, wenn der gesamte Scanvorgang nicht inakzeptabel lang werden soll.

Die Erfindung setzt sich zum Ziel, eine Vorrichtung zur Vermessung von Objekten in Gewässern zu schaffen, welche die genannten Nachteile überwindet.

Dieses Ziel wird mit einer Vorrichtung der einleitend genannten Art erreicht, welche sich auszeichnet durch die Kombination aus:

einem Sonar-Entfernungsmesser, welcher dafür ausgebildet ist, durch Laufzeitmessung an zumindest einem ausgesandten und vom Objekt reflektierten Schallimpuls einen ersten Entfernungsmesswert zu erstellen und auf einem Ausgang des Sonar-Entfernungsmessers auszugeben, und
einem Laser-Entfernungsmesser, welcher dafür ausgebildet ist, durch Laufzeitmessung an einer Sequenz von ausgesandten und vom Objekt reflektierten Laserimpulsen einen zweiten Entfernungsmesswert zu erstellen und auf einem Ausgang des Laser-Entfernungsmessers als Objekt-Entfernungsmesswert auszugeben,

wobei die Anzahl von Laserimpulsen der Sequenz über einen Steuereingang des Laser-Entfernungsmessers steuerbar ist, und

wobei der Steuereingang des Laser-Entfernungsmessers an den Ausgang des Sonar-Entfernungsmessers angeschlossen ist.

Mit Hilfe des Sonar-Entfernungsmessers, dessen Schallimpulse auch große Wassertiefen durchqueren können, wird ein erster, "grober" Entfernungsmesswert des Objekts, z.B. des Gewässerbodens, erstellt. Auf Grundlage dieses ersten Entfernungsmesswerts wird dann die Anzahl von Laserimpulsen, welche für die Erstellung des zweiten, genaueren Laser-Entfernungsmesswerts herangezogen werden, angepasst. Damit wird die "Verweilzeit" des Laser-Entfernungsmessers an einem Messpunkt adaptiv an die Gewässertiefe angepasst, so dass für einen Scanvorgang, der eine Vielzahl von Messpunkten des Objekts bzw. Gewässerbodens umfasst, eine signifikante Reduzierung der Gesamtscanzeit erreicht werden kann.

Wenn die Vorrichtung über eine eigene Antriebseinrichtung zur Fortbewegung über die Gewässeroberfläche oder durch das Gewässer verfügt, um z.B. den Gewässerboden fortschreitend abzutasten bzw. zu scannen, wird gemäß einer vorteilhaften Ausführungsform der Erfindung vorgesehen, dass die Geschwindigkeit der Fortbewegung über einen Steuereingang der Antriebseinrichtung steuerbar ist, welcher ebenfalls an einen Ausgang des Sonar-Entfernungsmessers angeschlossen ist. Dadurch wird eine an die Wassertiefe angepasste Verweilzeit des Laser-Entfernungsmessers auch in örtlicher Hinsicht für einen bestimmten Messpunkt gewährleistet.

In einer ersten Variante der Erfindung ist die Vorrichtung dazu in Form eines Wasserfahrzeuges ausgebildet und die Antriebseinrichtung weist zumindest eine Wasserschraube auf. Die Vorrichtung kann so beispielsweise in der Art eines Tiefenvermessungsschiffs betrieben werden.

In einer zweiten Variante ist die Vorrichtung in Form eines Luftfahrzeugs ausgebildet, beispielsweise eines UAV (unmanned aerial vehicle), z.B. einer Helikopterdrohne, und die Antriebseinrichtung weist demgemäß zumindest eine Luftschraube auf. Das Luftfahrzeug ist bevorzugt senkrechtstart- und -landefähig (vertical take-off and landing, VTOL) und mit Schwimmkörpern zur Wasserlandung ausgestattet, so dass der Sonar-Entfernungsmesser zur Schallübertragung in das Gewässer eintauchen kann. Die Vorrichtung kann auf diese Weise in der Art einer Libelle "hüpfend" über die Wasseroberfläche geführt werden und dabei jeweils einen oder mehrere Messpunkte des Gewässerbodens erstellen.

Besonders günstig ist es, wenn die Vorrichtung eine Positionsbestimmungseinrichtung zur Bestimmung von Positionsmesswerten und eine daran und an den Laser-Entfernungsmesser angeschlossene Auswerteeinrichtung aufweist, welche aus einer Mehrzahl von Positionsmesswerten und Objekt-Entfernungsmesswerten ein 3D-Modell des Objekts, z.B. des Gewässerbodens, erstellt. Eine solche Positionsbestimmungseinrichtung kann beispielsweise ein Empfänger für ein globales Satellitennavigationssystem (global navigation satellite system, GNSS) wie GPS, Glonass, Galileo usw. sein und optional mit einer Trägheitsmesseinrichtung (inertial measurement unit, IMU) zur Bestimmung der Lage (Winkelorientierung) versehen sein.

In weiterer Ausgestaltung der Erfindung kann der Laser-Entfernungsmesser eine winkelveränderliche Ablenkeinrichtung für die Laserimpulse aufweisen, wobei die Winkelgeschwindigkeit des Ablenkwinkels über einen Steuereingang der Ablenkeinrichtung steuerbar ist, welcher ebenfalls an den Ausgang des Sonar-Entfernungsmessers angeschlossen ist. Der Laser-Entfernungsmesser in Verbindung mit seiner winkelveränderlichen Ablenkeinrichtung bildet einen Laserscanner, der die Laserimpulse in der Art eines Messstrahls abtastend über einen Winkelbereich führt ("Scanfächer"). Auch in diesem Fall kann durch die vom ersten Entfernungsmesswert abhängige Steuerung der Winkelgeschwindigkeit gewährleistet werden, dass der Laser-Entfernungsmesser eine optimale Verweilzeit auf einem Messpunkt hat. Wenn die Auswerteeinrichtung ein 3D-Modell des Objekts erstellt, berücksichtigt sie bevorzugt - zusätzlich zu den Positions- und optionalen Lagemesswerten der Positionsbestimmungseinrichtung - auch die Winkelwerte der Ablenkeinrichtung.

Die Steuerung der Anzahl von Laserimpulsen pro Entfernungsmesspunkt in Abhängigkeit des ersten Entfernungsmesswerts kann auch verschiedene Arten zu einer SNR-Verbesserung führen. Beispielsweise kann die entsprechende Anzahl von Laser-Entfernungsmesswerten pro Messwert einfach gemittelt werden, wenn das SNR pro Messwert dafür ausreicht. Bevorzugt wird jedoch die ermittelte Anzahl von Laserimpulsen mittels "pre-detection averaging" ausgewertet, wie es beispielsweise in der EP 2 469 297 B1 beschrieben ist.

Dazu ist der Laser-Entfernungsmesser bevorzugt ausgebildet, die reflektierten Laserimpulse der Sequenz jeweils in ihrem Zeitverlauf über ein Zeitfenster aufzuzeichnen, das in einem vorgegebenen Abstand vom Aussendezeitpunkt des jeweiligen Laserimpulses beginnt, die aufgezeichneten Zeitverläufe zu einem Summen-Zeitverlauf aufzusummieren, darin einen schwellwertüberschreitenden Summenimpuls zu detektieren, und aus dessen Zeitlage den Objekt-Entfernungsmesswert zu bestimmen.

Wie erörtert kann mit einem derartigen Pre-detection-averaging-Verfahren eine Steigerung des SNR proportional zur Wurzel der Anzahl aufsummierter Laserimpulse erreicht werden. Da das SNR aufgrund der in der Praxis meist unvermeidlichen Aufspreizung des Laserstrahls und dadurch bedingten quadratischen Abnahme der Intensität über die Entfernung abnimmt, wird bevorzugt die Anzahl aufsummierter Laserimpulse abhängig von der vierten Potenz des Sonar-Entfernungsmesswerts gemacht. Um auch die mit zunehmender Entfernung zunehmende Dämpfung der Laserimpulse im Wasser zu berücksichtigen, kann sogar eine Abhängigkeit von mehr als der vierten Potenz verwendet werden. Dadurch kann ein entfernungsunabhängiges, d.h. entfernungskompensiertes, SNR für die Laser-Entfernungsmessung erzielt werden.

Gemäß einer weiteren besonders vorteilhaften Ausgestaltung der Erfindung kann auch der genannte vorgegebene Abstand der Summations-Zeitfenster über den Steuereingang des Laser-Entfernungsmessers vom Sonar-Entfernungsmesswert abhängig gemacht werden. Da der genannte Abstand der Summations-Zeitfensters den Beginn des Entfernungsmessbereichs des Laser-Entfernungsmessers festlegt und die Länge der Summations-Zeitfenster den Entfernungsmessbereich begrenzt, kann der Laser-Entfernungsmessbereich solcherart an den anhand der Sonar-Entfernungsmesswerte zu erwartenden Bereich von zu vermessenden Entfernungen optimal angepasst werden. Durch dieses "Range-Gating" können Störeinflüsse oder -reflexionen aus anderen Bereichen als dem interessierenden Entfernungsmessbereich ausgeblendet bzw. unterdrückt werden.

Die Laserimpulse der Sequenz können dabei pulspositionsmoduliert sein, wie beispielsweise in der EP 2 469 297 B1 beschrieben, oder auch unterschiedlich sein, um einen empfangenen Laserimpuls dem richtigen ausgesandten Laserimpuls zuordnen zu können. Diese Zuordnung ist insbesondere im Falle von sog. MTA-Szenarien (multiple time around) von Bedeutung, wo eine hohe Impulsrate der Laserimpulse zur Folge haben kann, dass der nächste Impuls schon ausgesandt wird, noch bevor die Reflexion des letzten Impulses empfangen wird.

Die Erfindung wird nachstehend anhand von in den beigeschlossenen Zeichnungen dargestellten Ausführungsbeispielen näher erläutert. In den Zeichnungen zeigt:

Fig. 1 den Einsatz der Vorrichtung der Erfindung zur Vermessung des Bodens eines Gewässers in zwei verschiedenen Stellungen in einem schematischen Schnitt;
Fig. 2 die beiden Stellungen und zugehörigen Messpunkte der Vorrichtung von Fig. 1 perspektivisch in einem Koordinatensystem;
Fig. 3 ein Blockschaltbild der Vorrichtung der Erfindung;
Fig. 4 den Laser-Entfernungsmesser der Vorrichtung von Fig. 3 in einem kombinierten Blockschaltbild und Strahlendiagramm; und
Fig. 5 ein beispielhaftes Pre-Detection-Averaging-Verfahren für den Laser-Entfernungsmesser der Vorrichtung der Erfindung.

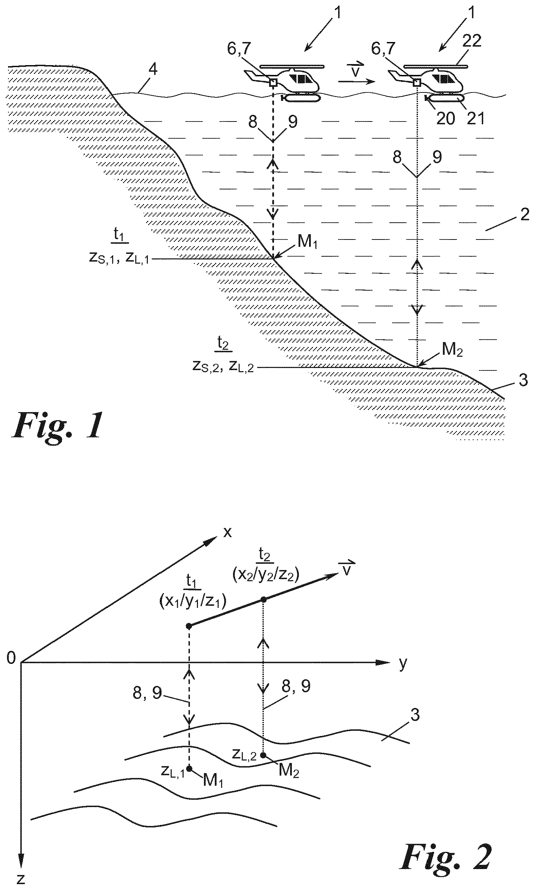

Fig. 1 zeigt eine Vorrichtung 1 zur Messung der Entfernung $z_L$ zu einem Objekt in einem Gewässer 2. Das Objekt ist im gezeigten Beispiel ein erster Messpunkt $M_1$ des Gewässerbodens 3, der zu einem ersten Zeitpunkt $t_1$ in einer Entfernung $z_{L,1}$ von einem ersten Ort $x_1/y_1/z_1$ der Gewässeroberfläche 4 aus gemessen wird, oder ein zweiter Messpunkt $M_2$ des Gewässerbodens 3, der zu einem zweiten Zeitpunkt $t_2$ in einer Entfernung $z_{L,2}$ von einem zweiten Ort $x_2/y_2/z_2$ der Gewässeroberfläche 4 aus gemessen wird. Aus einer Vielzahl von Messpunkten $M_1$, $M_2$, ..., allgemein $M_i$, kann ein 3D-Modell des Gewässerbodens 3 in dem Koordinatensystem x/y/z erstellt werden, siehe Fig. 2. Die Vorrichtung 1 kann dazu beispielsweise über die Gewässeroberfläche 4 geführt werden, wie durch den Bewegungsvektor v veranschaulicht, z.B. entlang einer vorgegebenen Trajektorie.

Das zu vermessende Objekt im Gewässer 2 kann nicht nur der Gewässerboden 3, sondern auch ein beliebiges anderes Objekt sein, beispielsweise ein U-Boot oder ein Schiffsrumpf. Die Vorrichtung 1 könnte sich auch selbst unter Wasser befinden, beispielsweise an Bord eines U-Boots, um die Entfernung zu einem Schiffsrumpf oder einem anderen U-Boot zu vermessen.

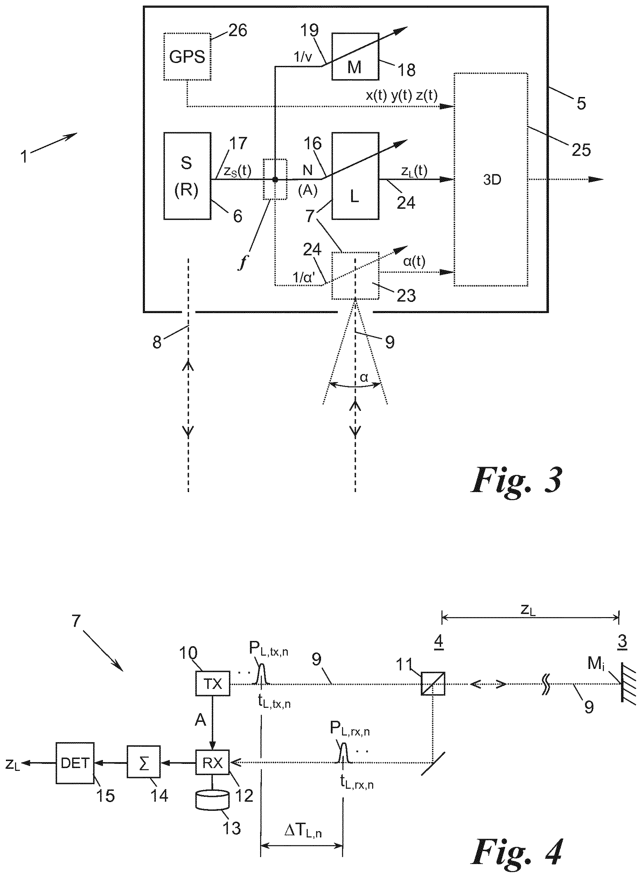

Unter Bezugnahme auf Fig. 3 enthält die Vorrichtung 1 zur Messung der Entfernung $z_{L,i}$ (im weiteren auch kurz $z_L$ genannt) in oder an einem Gehäuse bzw. einer Tragkonstruktion 5 sowohl einen Sonar-Entfernungsmesser 6 als auch einen Laser-Entfernungsmesser 7. Der Sonar-Entfernungsmesser 6 erstellt mit Hilfe eines Sonar-Messstrahls 8, der auf das Objekt bzw. den Messpunkt $M_i$ gerichtet wird, einen Sonar-Entfernungsmesswert $z_{S,i}$ (im weiteren auch kurz $z_S$ genannt), und der Laser-Entfernungsmesser 7 erstellt mit Hilfe eines auf das Objekt bzw. den Messpunkt $M_i$ gerichteten Laser-Messstrahls 9 den gesuchten Laser-Entfernungsmesswert $z_L$.

Der Sonar-Messstrahl 8 enthält zumindest einen Schallimpuls, der vom Objekt $M_i$ reflektiert wird und aus dessen Laufzeit, d.h. der Differenz $\Delta T$ zwischen Aussendezeitpunkt $t_{S,tx}$ des Schallimpulses und Empfangszeitpunkt $t_{S,rx}$ des reflektierten Schallimpulses, der Sonar-Entfernungsmesser 6 den Entfernungsmesswert $z_S$ anhand der bekannten Beziehung

$$z_S = c_S \cdot (t_{S,rx} - t_{S,tx})/2$$

(mit $c_S$ = Schallgeschwindigkeit in Wasser) ermittelt. Es versteht sich, dass der Sonar-Messstrahl 8 nicht in demselben Maße gebündelt werden kann wie der Laser-Messstrahl 9, so dass der Sonar-Messstrahl 8 in der Regel eine aufgeweitete Keulenform hat (nicht dargestellt). Weiters ist die Schallgeschwindigkeit $c_S$ im Wasser stark von der Temperatur, dem Salzgehalt, dem hydrostatischen Druck usw. abhängig und in der Regel nicht genau bekannt. In der Folge ist der Sonar-Entfernungsmesswert $z_S$ meist nicht sehr genau. Andererseits wird der Sonar-Messstrahl 8 durch Wassertrübung, Schwebstoffe usw. kaum gestört, so dass auch große Wassertiefen $z_S$ mit einem Schallimpuls vermessen werden können.

In den Fig. 1 und 2 wurden die beiden Messstrahlen 8, 9 zwecks Übersichtlichkeit der Darstellung zusammenfallend gezeigt. In der Praxis können die Messstrahlen 8, 9 auch nichtkoaxial, divergierend oder konvergierend sein, jeweils auch mit unterschiedlichen Aufweitungswinkeln bzw. Scanwinkel, wie später noch ausführlicher erörtert.

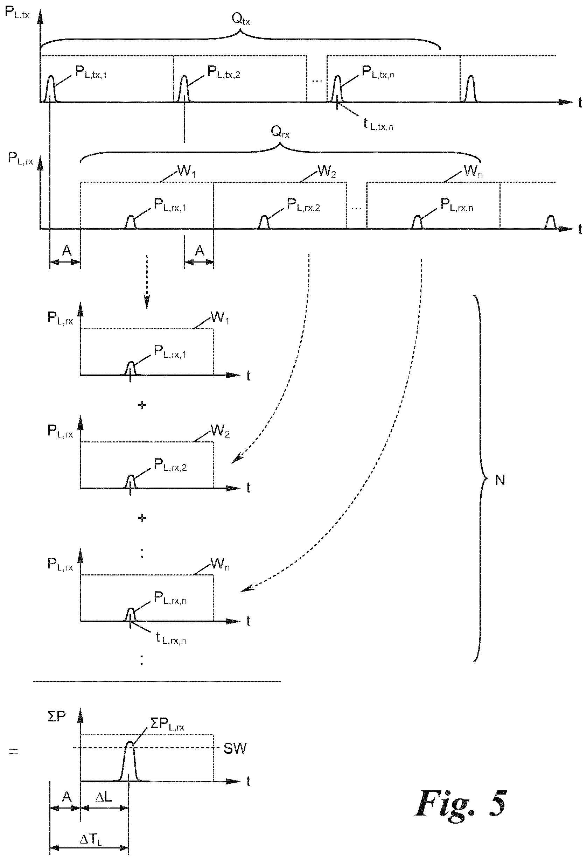

Der Laser-Messstrahl 9 enthält nicht nur einen einzelnen Laserimpuls pro Messpunkt $M_i$, sondern gleich eine ganze Sequenz $Q_{tx}$ von N Stück aufeinanderfolgenden Laserimpulsen $P_{L,tx,1}$, $P_{L,tx,2}$, ..., allgemein $P_{L,tx,n}$ (n = 1 ... N; mit N = 1, 2, 3, ...), siehe Fig. 4 und 5. Die Reflexion der ausgesandten Sequenz $Q_{tx}$ von N Laserimpulsen $P_{L,tx,n}$ am Objekt $M_i$ führt zu einer Sequenz $Q_{rx}$ von N Stück reflektierten bzw. empfangenen Laserimpulsen $P_{L,rx,n}$ im Laser-Entfernungsmesser 7 pro Objekt bzw. Messpunkt $M_i$. Eine weitere Sequenz $Q_{tx}$ kann auf denselben oder einen nächsten Messpunkt $M_i$ ausgesandt werden, d.h. eine Folge von Sequenzen $Q_{tx}$ zur Vermessung einer Vielzahl von Messpunkten $M_i$.

Aus den Laufzeiten $\Delta T_{L,n}$, d.h. den Differenzen zwischen den Empfangszeitpunkten $t_{L,rx,n}$ der reflektierten Laserimpulse $P_{L,rx,j}$ und den Aussendezeitpunkten $t_{L,tx,n}$ der jeweiligen zugehörigen ausgesandten Laserimpulse $P_{L,tx,n}$, kann nun wieder anhand der bekannten Beziehung

$$z_{L,n} = c_L \cdot (t_{L,rx,n} - t_{L,tx,n})/2$$

(mit $c_L$ = Lichtgeschwindigkeit in Wasser) ein Satz von N Entfernungsmesswerten $z_{L,n}$ ermittelt werden, aus dem beispielsweise die gesuchte Entfernung $z_L$ als Mittelwert gebildet wird.

Alternativ - und bevorzugt - werden die N empfangenen Laserimpulse $P_{L,rx,n}$ einer Sequenz $Q_{rx}$ im Rahmen eines Pre-Detection-Averaging-Verfahrens kombiniert, wie es beispielsweise aus der genannten EP 2 469 297 B1 bekannt ist und anhand von Fig. 5 kurz erläutert wird. Jeder der N reflektierten Laserimpulse $P_{L,rx,n}$ der Empfangssequenz $Q_{rx}$ wird in seinem Zeitverlauf über ein Zeitfenster $W_n$ aufgezeichnet, das jeweils in einem vorgegebenen Abstand A zum Aussendezeitpunkt $t_{L,tx,n}$ des zugehörigen ausgesandten Laserimpulses $P_{L,tx,n}$ beginnt und eine Länge etwa gleich dem Impulsabstand der Laserimpulse $P_{L,tx,n}$ in der Sendesequenz $Q_{tx}$ hat.

Die in den Zeitfenstern $W_n$ aufgezeichneten Zeitverläufe werden anschließend zeitlagenrichtig zu einem Summen-Zeitverlauf $\Sigma P$ aufsummiert, und darin wird ein einen Schwellwert SW überschreitender Summenimpuls $\Sigma P_{L,rx}$ detektiert. Die Zeitlage $\Delta L$ des Summenimpulses $\Sigma P_{L,rx}$ plus dem Abstand A ergibt die Laufzeit $\Delta T_L$ der Laserimpulse $P_{L,tx,n}$ der Sequenz $Q_{tx}$, aus

welcher anschließend die gesuchte Entfernung $z_L = c_L \cdot \Delta T_L/2$ ermittelt werden kann.

Fig. 4 zeigt beispielhafte Komponenten des Laser-Entfernungsmessers 7, welche zur Durchführung des Pre-Detection-Averaging-Verfahrens von Fig. 5 verwendet werden können, und zwar einen Lasersender 10, der auf das Objekt $M_i$ gerichtet ist, einen Strahlteiler 11 zur Auskopplung der reflektierten Laserimpulse $P_{L,rx,n}$ aus dem Laser-Messstrahl 9 zu einem Empfänger 12 hin, welcher den jeweiligen Abstand A eines Zeitfensters $W_n$ vom Sender 10 empfängt, eine Datenbank 13 zur Aufzeichnung der empfangenen Laserimpulse $P_{L,rx,n}$ in den Zeitfenstern $W_n$, eine daran angeschlossene Summierstufe 14 zur Aufsummierung der aufgezeichneten Zeitverläufe zum Summenimpuls $\Sigma P_{L,rx}$ und eine Schwellwertdetektions- und Auswertestufe 15 zur Berechnung der Entfernung $z_L$ auf die genannte Weise.

Um die empfangen Laserimpulse $P_{L,rx,n}$ den jeweils "richtigen", ursächlichen, ausgesandten Laserimpulsen $P_{L,tx,n}$ zuzuordnen, können die N Laserimpulse $P_{L,tx,n}$ einer Sequenz $Q_{tx}$ jeweils unterschiedlich "markiert" werden, beispielsweise durch unterschiedliche Pulspositionsmodulation oder Codemodulation.

Eine Pulspositionsmodulation der ausgesandten Laserimpulse $P_{L,tx,n}$ ist in der Technik auch als "PRR-Modulation" (pulse repetition rate modulation) bekannt und erzielt eine Verjitterung von nicht im "richtigen" Empfangszeitfenster $W_n$ auftretenden reflektierten Impulsen, so dass sich nur reflektierte Impulse im "richtigen" Empfangszeitfenster $W_n$ (überlagernd) zu einem den Schwellwert SW überschreitenden Summen-Impuls $\Sigma P_{L,rx}$ aufsummieren.

Eine Codemodulation der ausgesandten Laserimpulse $P_{L,tx,n}$ prägt diesen jeweils einen Code auf, beispielsweise mittels Intensitätsmodulation (Amplitudenmodulation), welcher Code in den reflektierten empfangenen Laserimpulsen $P_{L,rx,n}$ z.B. durch Korrelationsverfahren wiedererkannt werden kann, um die Empfangsimpulse dem jeweils richtigen Sendeimpuls zuordnen zu können.

Durch die Verwendung von N Stück Laserimpulsen $P_{L,tx,n}$ pro Messpunkt $M_i$ kann beispielsweise bei einem Pre-Detection-Averaging-Verfahren wie in Fig. 5 das SNR um den Faktor $\sqrt{N}$ erhöht werden. Dies kann zur Verbesserung des SNR im Falle sehr schwacher reflektierter Laserimpulse verwendet werden, wie sie aufgrund der Wassertrübung bei großen Wassertiefen bzw. hohen zu vermessenden Entfernungen $z_L$ auftreten. Je größer die Entfernung $z_L$ ist, eine umso größere Anzahl N von Laserimpulsen $P_{L,tx,n}$ einer Sequenz $Q_{tx}$ ist dazu erforderlich, um einen Laser-Entfernungsmesserwert $z_L$ genau und zuverlässig erstellen zu können.

Der Laserentfernungsmesser 7 verfügt dazu über einen Steuereingang 16, über welchen die Anzahl N der gemeinsam ausgewerteten reflektierten Laserimpulse $P_{L,rx,n}$, beispielsweise die Anzahl der aufsummierten Zeitfenster $W_n$ in dem Pre-Detection-Averaging-Verfahren von Fig. 5, eingestellt werden kann.

Der Steuereingang 16 des Laser-Entfernungsmessers 7 ist an einen Ausgang 17 der Sonar-Entfernungsmessers 6 angeschlossen, auf welchem dieser seine "groben" Sonar-Entfernungsmesswerte $z_S$ ausgibt. Dadurch wird die Anzahl N des Laserentfernungsmessers 7 in Abhängigkeit vom Entfernungsmesswert $z_S$ des Sonar-Entfernungsmessers 6 gesteuert, beispielsweise in linearer oder quadratischer Abhängigkeit oder einer beliebigen Abhängigkeitsfunktion, wie symbolisch durch die Funktion *f* auf der Verbindung zwischen Ausgang 17 und Steuereingang 16 veranschaulicht.

Bevorzugt ist die Funktion *f* eine Abhängigkeit vierter oder höherer Potenz (Ordnung). So wird bei doppelter Entfernung $z_S$ z.B. eine $2^4$- bzw. 16-fache Anzahl N festgelegt, bei dreifacher Entfernung $z_S$ eine $3^4$- bzw. 81-fache Anzahl N usw. usf. Dadurch kann das SNR des Laser-Entfernungsmessers 7 weitgehend unabhängig von der Gewässertiefe gemacht werden. Auch andere funktionelle Abhängigkeiten N = $f(z_s)$, welche z.B. auch die Dämpfung des Laser-Messstrahls 9 im Wasser kompensieren, können bei der Kopplung der Ein- und Ausgänge 16, 17 festgelegt werden.

Der Sonar-Entfernungsmesswert $z_S$ am Ausgang 17 der Sonar-Entfernungsmesser 6 kann auch dazu herangezogen werden, um den Abstand A der Summations-Zeitfenster $W_n$ zu steuern. Beispielsweise kann der Abstand A linear proportional mit dem Entfernungsmesswert $z_S$ erhöht werden, um die Messzeitfenster $W_n$ und damit das Entfernungsmessfenster des Laser-Entfernungsmessers 7 an den - auf Basis der "groben" Sonar-Entfernungsmesswerte $z_S$ zu erwartenden - Bereich von möglichen Entfernungsmesswerten optimal anzupassen.

Wie bereits kurz angedeutet, kann die Vorrichtung 1 auch als Scanner ausgebildet sein, welcher eine Vielzahl von Messpunkten $M_i$ vermisst, um daraus ein 3D-Modell des vermessenen Objekts, beispielsweise des Gewässerbodens 3, zu erstellen. Zu diesem Zweck ist die Vorrichtung 1 mit einer - in Fig. 3 nur schematisch dargestellten - Antriebseinrichtung 18 ausgestattet, deren Geschwindigkeit v der Fortbewegung z.B. über die Gewässeroberfläche 4 über einen Steuereingang 19 steuerbar ist. Die Antriebseinrichtung 18 kann beispielsweise eine Wasserschraube 20 (Fig. 1) aufweisen, z.B. einen Schiffspropeller oder einen Impeller für einen Jetantrieb, und die Tragstruktur 5 der Vorrichtung 1 als Schiffskörper ausgebildet oder mit Schwimmkörpern 21 (Fig. 1) versehen sein, um die Vorrichtung 1 in der Art eines Schiffs über die Gewässeroberfläche 4 oder in der Art eines U-Boots durch das Gewässer 2 hindurch zu bewegen.

Alternativ kann die Vorrichtung 1 als Luftfahrzeug ausgebildet sein, insbesondere als ein Luftfahrzeug, das zu Senkrechtstart und Senkrechtlandung (vertical take-off and landing, VTOL) befähigt ist, wie ein Helikopter. Beispielsweise ist die Vorrichtung 1 in Form eines unbemannten Luftfahrzeuges (unmanned aerial vehicle, UAV) ausgebildet, z.B. als Tricopter-, Quadrocopter-, Hexacopter- oder Oktocopter-Drohne, und die Antriebseinrichtung 18 weist entsprechend eine oder mehrere Luftschrauben 22 auf (Fig. 1). Die Tragstruktur 5 kann hier ebenfalls mit Schwimmkörpern 21 zur temporären Wasserung bzw. Wasserlandung ausgestattet sein. Die Vorrichtung 1 kann dadurch - in der Art einer "über das Wasser hüpfenden Libelle" - verschiedene Punkte x/y/z an der Wasseroberfläche 4 ansteuern, jeweils einen Tiefenmesswert $z_L$ nehmen, und so den Gewässerboden 3 vermessen.

Um dabei jeweils eine ausreichende Verweilzeit der Vorrichtung 1 pro Messpunkt $M_i$ zu garantieren, d.h. die Aussendung von N Laserimpulsen $P_{L,tx,n}$ auf ein und denselben Messpunkt $M_i$ bzw. zumindest in unmittelbarer Nähe desselben zu gewährleisten, kann auch die Antriebseinrichtung 18 vom Ausgang 17 des Sonar-Entfernungsmessers 6 gesteuert werden, zwar insbesondere in indirekter Proportionalität: Je größer die vom Sonar-Entfernungsmesser 6 ermittelte Wassertiefe $z_s$ ist, desto langsamer wird die Fortbewegungsgeschwindigkeit v der Antriebseinrichtung 18 eingestellt. Hiefür kann auch eine individuelle Abhängigkeitsfunktion $f$ zwischen $z_s(t)$ und v festgelegt werden, falls erforderlich.

Zusätzlich oder alternativ zu der Fortbewegung v kann der Laser-Entfernungsmesser 7 auch mit einer in den Lasermessstrahl 9 eingeschalteten winkelveränderlichen Ablenkeinrichtung 23 ausgestattet sein, welche die Laserimpulse $P_{L,tx,n}$ bzw. den Lasermessstrahl 9 abtastend über einen Winkelbereich $\alpha$ führt, um von einem Ort x/y/z an der Wasseroberfläche 4 oder im Gewässer 2 gleich eine Mehrzahl von Messpunkten $M_i$ zu vermessen. Die Ablenkeinrichtung 23 kann beispielsweise eines oder mehrere Facetten-Spiegelräder oder einen oder mehrere um eine oder mehrere Achsen rotierende oder schwingende Ablenkspiegel haben, um den Lasermessstrahl 9 über den Winkelbereich $\alpha$ abtastend zu führen (zu scannen), auch in zwei Dimensionen, d.h. über einen Raumwinkelbereich $\alpha$.

Um auch hier wieder eine ausreichende Verweilzeit des Lasermessstrahls 9 an ein und demselben Messpunkt $M_i$ zu gewährleisten, kann auch die Ablenkeinrichtung 23 mit einem Steuereingang 24 versehen sein, über welchen die Geschwindigkeit $d\alpha/dt$, kurz $\alpha'$, ihrer Ablenkwinkelveränderung einstellbar ist. Der Steuereingang 24 der Ablenkeinrichtung 23 ist ebenfalls an den Ausgang 17 des Sonar-Entfernungsmessers 6 angeschlossen, u.zw. so, dass eine umso langsamere Winkelgeschwindigkeit $\alpha'$ eingestellt wird, je größer die vom Sonar-Entfernungsmesser 6 ermittelte Wassertiefe $z_s$ ist. Auch hiefür kann wieder eine individuelle Abhängigkeitsfunktion $f$ zwischen $z_s(t)$ und $\alpha'$ festgelegt werden, falls erforderlich.

Um aus einer Vielzahl von auf diese Weise vermessenen Messpunkten $M_i$ des Objekts, z.B. des Gewässerbodens 3, ein 3D-Modell des Objekts bzw. des Gewässerbodens zu erstellen, verfügt die Vorrichtung 1 über eine an den Ausgang 24 des Laser-Entfernungsmessers 7 angeschlossene Auswerteeinrichtung 25, welcher gleichzeitig auch Information über die Position und/oder Lage des Lasermessstrahls 9 zugeführt wird. Zu diesem Zweck kann die Vorrichtung 1 eine Positionsbestimmungseinrichtung 26 zur Ermittlung ihrer eigenen Position x/y/z und/oder Lage (Winkelorientierung) auf der Wasseroberfläche 4 oder im Gewässer 2 haben, beispielsweise einen Satellitenempfänger für ein globales Satellitennavigationssystem (global navigation satellite system, GNSS) wie GPS, Glonass, Galileo od.dgl., optional mit einer Trägheitsmesseinrichtung (inertial measurement unit, IMU) zur Bestimmung der Lage der Vorrichtung 1 und damit des Lasermessstrahls 9.

Wenn der Laser-Entfernungsmesser 7 eine nachgeschaltete Ablenkeinrichtung 23 hat, um einen Laser-Scanner zu bilden, führt bevorzugt auch die Ablenkeinrichtung 23 ihren jeweiligen Ablenkwinkelwert $\alpha$ der Auswerteeinrichtung 25 zu, so dass diese über alle notwendigen Informationen, hier z.B. Positionsmesswerte x/y/z(t), (optional) Lagemesswerte, Ablenkwinkelwerte $\alpha(t)$, Entfernungsmesswerte $z_L(t)$, verfügt, um die Messpunkte $M_i$ im Koordinatensystem x/y/z als Punktewolke aufzustellen, welche ein 3D-Modell des vermessenen Objekts, hier des Gewässerbodens 3, wiedergibt.

Die Erfindung ist nicht auf die dargestellten Ausführungsformen beschränkt, sondern umfasst alle Varianten, Modifikationen und Kombinationen, die in den Rahmen der angeschlossenen Ansprüche fallen.

## Patentansprüche

1. Vorrichtung (1) zur Messung der Entfernung ($z_L$) zu einem Objekt (3) in einem Gewässer (2), mit einem Sonar-Entfernungsmesser (6), welcher dafür ausgebildet ist, durch Laufzeitmessung an zumindest einem ausgesandten und vom Objekt (3) reflektierten Schallimpuls ($P_S$) einen ersten Entfernungsmesswert ($z_S$) zu erstellen und auf einem Ausgang (17) des Sonar-Entfernungsmessers (6) auszugeben, und einem Laser-Entfernungsmesser (7), welcher dafür ausgebildet ist, durch Laufzeitmessung an zumindest einem ausgesandten und vom Objekt (3) reflektierten Laserimpuls ($P_L$) einen zweiten Entfernungsmesswert ($z_L$) zu erstellen und auf einem Ausgang (24) des Laser-Entfernungsmessers (7) auszugeben, **dadurch gekennzeichnet, dass** der Laser-Entfernungsmesser (7) dafür ausgebildet ist, durch Laufzeitmessung an einer Sequenz (Q) von ausgesandten und vom Objekt (3) reflektierten Laserimpulsen ($P_L$) den zweiten Entfernungsmesswert ($z_L$) zu erstellen und auf dem Ausgang (24) des Laser-Entfernungsmessers (7) als Objekt-Entfernungsmesswert ($z_L$) auszugeben, wobei die Anzahl (N) von Laserimpulsen ($P_L$) der Sequenz (Q) über einen Steuereingang (16) des Laser-Entfernungsmessers (7) steuerbar ist, und wobei der Steuereingang (16) des Laser-Entfernungsmessers (7) an den Ausgang (17) des Sonar-Entfernungsmessers (6) angeschlossen ist, sodass die Anzahl (N) der Laserimpulse ($P_L$) der Sequenz (Q) in Abhängigkeit des am Ausgang (17) des Sonar-Entfernungsmessers (6) ausgegebenen ersten Entfernungsmesswerts ($z_S$) gesteuert ist.

2. Vorrichtung nach Anspruch 1, **dadurch gekennzeichnet, dass** sie eine Antriebseinrichtung (18) zur Fortbewegung über die Gewässeroberfläche (4) oder durch das Gewässer (2) aufweist, wobei die Geschwindigkeit (v) der Fortbewegung über einen Steuereingang (19) der Antriebseinrichtung (18) steuerbar ist, welcher ebenfalls an den Ausgang (17) des Sonar-Entfernungsmessers (6) angeschlossen ist.

3. Vorrichtung nach Anspruch 2, **dadurch gekennzeichnet, dass** sie in Form eines Wasserfahrzeugs ausgebildet ist und die Antriebseinrichtung (18) zumindest eine Wasserschraube (20) aufweist.

4. Vorrichtung nach Anspruch 2, **dadurch gekennzeichnet, dass** sie in Form eines Luftfahrzeugs ausgebildet ist und die Antriebseinrichtung (18) zumindest eine Luftschraube (22) aufweist.

5. Vorrichtung nach Anspruch 4, **dadurch gekennzeichnet, dass** das Luftfahrzeug senkrechtstart- und -landefähig und mit Schwimmkörpern (21) zur Wasserlandung ausgestattet ist.

6. Vorrichtung nach einem der Ansprüche 1 bis 5, **dadurch gekennzeichnet, dass** sie eine Positionsbestimmungseinrichtung (26) zur Bestimmung von Positionsmesswerten und eine daran und an den Laser-Entfernungsmesser (7) angeschlossene Auswerteeinrichtung (25) aufweist, welche aus einer Mehrzahl von Positionsmesswerten (x, y, z) und Objekt-Entfernungsmesswerten ($z_L$) ein 3D-Modell des Objekts (3) erstellt.

7. Vorrichtung nach einem der Ansprüche 1 bis 6, **dadurch gekennzeichnet, dass** der Laser-Entfernungsmesser (7) eine winkelveränderliche Ablenkeinrichtung (23) für die Laserimpulse ($P_L$) aufweist, wobei die Winkelgeschwindigkeit ($\alpha$') des Ablenkwinkels ($\alpha$) über einen Steuereingang (24) der Ablenkeinrichtung (23) steuerbar ist, welcher ebenfalls an den Ausgang (17) des Sonar-Entfernungsmessers (6) angeschlossen ist.

8. Vorrichtung nach den Ansprüchen 6 und 7, **dadurch gekennzeichnet, dass** die Auswerteeinrichtung (25) bei der Erstellung des 3D-Modells auch Winkelwerte ($\alpha$) der Ablenkeinrichtung (23) berücksichtigt.

9. Vorrichtung nach einem der Ansprüche 1 bis 8, **dadurch gekennzeichnet, dass** der Laser-Entfernungsmesser (7) dafür ausgebildet ist, die reflektierten Laserimpulse ($P_{L,rx,n}$) der Sequenz ($Q_{tx}$) jeweils in ihrem Zeitverlauf über ein Zeitfenster ($W_n$) aufzuzeichnen, das in einem vorgegebenen Abstand (A) vom Aussendezeitpunkt ($t_{L,tx,n}$) des jeweiligen Laserimpulses ($P_{L,tx,n}$) beginnt, die aufgezeichneten Zeitverläufen zu einem Summen-Zeitverlauf aufzusummieren, darin einen schwellwertüberschreitenden Summenimpuls ($\Sigma P_{L,rx}$) zu detektieren, und aus dessen Zeitlage ($\Delta L$) den Objekt-Entfernungsmesswert ($z_L$) zu bestimmen.

10. Vorrichtung nach Anspruch 9, **dadurch gekennzeichnet, dass** die genannte Anzahl (N) von mindestens der vierten Potenz des ersten Entfernungsmesswerts ($z_S$) abhängig ist.

11. Vorrichtung nach Anspruch 9 oder 10, **dadurch gekennzeichnet, dass** der vorgegebene Abstand (A) ebenfalls über den Steuereingang (16) des Laser-Entfernungsmessers (7) steuerbar ist.

12. Vorrichtung nach einem der Ansprüche 9 bis 11, **dadurch gekennzeichnet, dass** die Laserimpulse ($P_{L,rx,n}$) der Sequenz ($Q_{tx}$) pulspositions- oder codemoduliert sind.

**Claims**

1. An apparatus (1) for measuring the distance ($z_L$) to an object (3) in a water body (2), comprising a sonar distance measuring device (6), which is configured to generate a first distance measuring value ($z_S$) by measuring the time of flight of at least one emitted sonic pulse ($P_S$) reflected by the object (3) and to output it at an output (17) of the sonar distance measuring device (6), and a laser distance measuring device (7), which is configured to generate a second distance measuring value ($z_L$) by measuring the time of flight of at least one emitted laser pulse ($P_L$) reflected by the object (3) and to output it at an output (24) of the laser distance measuring device (7), **characterized in that** the laser measuring device (7) is configured to generate the second distance measuring value ($z_L$) by measuring the time of flight of a sequence (Q) of emitted laser pulses ($P_L$) reflected by the object (3) and to output it at an output (24) of the laser distance measuring device (7) as an object distance measuring value ($z_L$), wherein the number (N) of laser pulses ($P_L$) of the sequence (Q) is controllable via a control input (16) of the laser distance measuring device (7), and wherein the control input (16) of the laser distance measuring device (7) is connected to the output (17) of the sonar distance measuring device (6), so that the number (N) of laser pulses ($P_L$) of the sequence (Q) is controlled as a function of the first distance measuring value ($z_S$) output at the output (17) of the sonar distance measuring device (6).

2. The apparatus according to claim 1, **characterized in that** it comprises a propulsion unit (18) for moving over the surface of the water body (4) or through the water body (2), wherein the velocity (v) of the movement is controllable via a control input (19) of the propulsion unit (18), which is also connected to the output (17) of the sonar distance measuring device (6).

3. The apparatus according to claim 2, **characterized in that** it is conceived in the form of a water vehicle and the propulsion unit (18) comprises at least a water propeller (20).

4. The apparatus according to claim 2, **characterized in that** it is conceived in the form of an aerial vehicle and the propulsion unit (18) comprises at least an air propeller (22).

5. The apparatus according to claim 4, **characterized in that** the aerial vehicle is capable of vertical take-off and landing and is equipped with floats (21) for water landing.

6. The apparatus according to any one of the claims 1 to 5, **characterized in that** it has a position determining device (26) for determining positional measurement values and an evaluation unit (25) connected thereto and to the laser distance measuring device (7), which evaluation unit generates a 3D model of the object (3) from a plurality of positional measurement values (x, z, y) and object distance measurement values ($z_L$).

7. The apparatus according to any one of the claims 1 to 6, **characterized in that** the laser distance measuring device (7) has an angle-adjustable deflection device (23) for the laser pulses ($P_L$), wherein the angular velocity ($\alpha'$) of the deflection angle ($\alpha$) is controllable via a control input (24) of the deflection device (23), which is also connected to the output (17) of the sonar distance measuring device (6).

8. The apparatus according to claims 6 and 7, **characterized in that** the evaluation unit (25) also takes into account angular values ($\alpha$) of the deflection device (23) during the generation of the 3D model.

9. The object according to any one of the claims 1 to 8, **characterized in that** the laser distance measuring device (7) is configured to record the reflected laser pulses ($P_{L,rx,n}$) of the sequence ($Q_{tx}$) each in their temporal progression over a time window ($W_n$), which begins in a predetermined distance (A) from the transmit point in time ($t_{L,rx,n}$) of the respective laser pulse ($P_{L,rx,n}$), sum up the recorded temporal progressions to a summed temporal progression, detect therein a summed pulse ($\Sigma P_{L,rx}$) exceeding a threshold, and determine the object distance measurement value ($z_L$) from the temporal position ($\Delta L$) of the summed pulse.

10. The apparatus according to claim 9, **characterized in that** said number (N) is dependent of at least the fourth power of the first distance measurement value ($z_S$).

11. The apparatus according to claim 9 or 10, **characterized in that** the predetermined distance (A) is also controllable via the control input (16) of the laser distance measuring device (7).

12. The object according to any one of the claims 9 to 11, **characterized in that** the laser pulses ($P_{L,rx,n}$) of the sequence ($Q_{tx}$) are pulse position or code modulated.

**Revendications**

1. Dispositif (1) de mesure de distance ($Z_L$) par rapport à un objet (3) dans un eau (2), avec un télémètre sonar (6), lequel est conçu pour établir une première mesure de distance ($z_S$) par une mesure du temps de transit d'au moins une impulsion sonore ($P_S$) émise, et réfléchie par l'objet (3), et pour l'indiquer à une sortie (17) du télémètre sonar (6), et un télémètre laser (7), lequel est conçu pour établir une deuxième mesure de distance ($z_L$) par une mesure du temps de transit d'au moins une impulsion laser ($P_L$) émise, et réfléchie par l'objet (3), et pour l'indiquer à une sortie (24) du télémètre laser (7), **caractérisé en ce que** le télémètre laser (7) est conçu pour, par la mesure du temps de transit d'une séquence (Q) d'impulsions laser ($P_L$) émises, et réfléchies par l'objet (3), établir la deuxième mesure de distance ($z_L$) et l'indiquer à la sortie (24) du télémètre laser (7) comme étant une valeur de distance d'objet ($z_L$), où le nombre (N) des impulsions laser ($P_L$) de la séquence (Q) peut être commandé par une entrée de commande (16) du télémètre laser (7), et où l'entrée de commande (16) du télémètre laser (7) est raccordée à la sortie (17) du télémètre sonar (6), pour que le nombre (N) des impulsions laser ($P_L$) de la séquence (Q) est commandé en fonction de la première valeur de distance ($z_S$) émise à la sortie (17) du télémètre sonar (6).

2.  Dispositif selon la revendication 1, **caractérisé en ce qu'**il présente un dispositif d'entraînement (18) pour le déplacement au dessus de la surface de l'eau (4) ou à travers de l'eau (2), où la vitesse (v) du déplacement peut être commandée par une entrée de commande (19) du dispositif d'entraînement (18), lequel est également raccordé à la sortie (17) du télémètre sonar (6).

3.  Dispositif selon la revendication 2, **caractérisé en ce qu'**il est conçu sous la forme d'un bateau et le dispositif d'entraînement présente au moins une hélice marine (20).

4.  Dispositif selon la revendication 2, **caractérisé en ce qu'**il est conçu sous la forme d'un aéronef et le dispositif d'entraînement (18) présente au moins une hélice aérienne (22).

5.  Dispositif selon la revendication 4, **caractérisé en ce que** l'aéronef peut décoller et atterrir verticalement et est équipé de flotteurs (21) pour un atterrissage sur l'eau.

6.  Dispositif selon l'une des revendications 1 à 5, **caractérisé en ce qu'**il présente un dispositif de détermination de position (26) pour la détermination de valeurs de position et une unité d'évaluation (25) raccordée à ceci et au télémètre laser (7), laquelle établit un modèle 3D de l'objet (3) à partir d'une multitude de valeurs de positions (x, y, z) et de valeurs de distance ($z_L$) d'objet.

7.  Dispositif selon l'une des revendications 1 à 6, **caractérisé en ce que** le télémètre laser (7) présente un dispositif de déviation (23) variable du point de vue angulaire pour les impulsions laser ($P_L$), où la vitesse angulaire ($\alpha'$) de l'angle de déviation ($\alpha$) peut être commandée par une entrée de commande (24) du dispositif de déviation (23), laquelle est également raccordée à la sortie (17) du télémètre laser (6).

8.  Dispositif selon les revendications 6 et 7, **caractérisé en ce que** l'unité d'évaluation (25), lors de l'établissement du modèle 3D, tient également compte des valeurs angulaires ($\alpha$) du dispositif de déviation (23).

9.  Dispositif selon l'une des revendications 1 à 8, caractérisé en ce le télémètre laser (7) est conçu pour enregistrer les impulsions laser réfléchies ($P_{L,rx,n}$) de la séquence ($Q_{tx}$) chacune dans sa progression temporelle sur une fenêtre temporelle (Wn) qui commence à une distance prédéfinie (A) après le point d'émission ($t_{L,tx,n}$) de l'impulsion laser ($P_{L,tx,n}$) respective,

faire la somme des progressions temporelles enregistrées pour avoir une progression temporelle totale,

détecter une impulsion totale ($\Sigma P_{L,rx}$) dépassant une valeur de seuil dans celle-ci, et

déterminer la valeur de distance ($z_L$) d'objet à partir de la position temporelle ($\Delta L$) d'impulsion totale.

10. Dispositif selon la revendication 9, **caractérisé en ce que** ledit nombre (N) est dépendant d'au moins la puissance quatrième de la première valeur de distance ($z_S$).

11. Dispositif selon la revendication 9 ou 10, **caractérisé en ce que** la distance prédéfinie (A) peut également être commandée par l'entrée de commande (16) du télémètre laser (7).

12. Dispositif selon l'une des revendications 9 à 11, **caractérisé en ce que** les impulsions laser ($P_{L,rx,n}$) de la séquence ($Q_{tx}$) sont modulées en position ou en code.

*Fig. 1*

*Fig. 2*

*Fig. 3*

*Fig. 4*

*Fig. 5*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014300885 A1

- EP 2469297 B1

**In der Beschreibung aufgeführte Nicht-Patentliteratur**

- **CHURCH PHILIP et al.** Overview of a hybrid underwater camera system. *Optomechatronic Micro/Nano Devices and Components,* 08. Oktober 2007, vol. III